# EUROPEAN PATENT APPLICATION

(11) **EP 3 594 492 A1**
(43) Date of publication of application: **15.01.2020**
(21) Application number: 19179787.7
(22) Date of filing: 12.06.2019
(51) Int. Cl.: F03D 7/02

(54) **YAW DRIVE FOR A WIND TURBINE INSTALLATION AND METHOD TO OPERATE THE YAW DRIVE**

(30) Priority: 09.07.2018 EP 18182521
(71) Applicant: youWINenergy GmbH, 27568 Bremerhaven (DE)
(72) Inventor: ROHDEN, Rolf, 26607 Aurich (DE)
(74) Representative: Bird & Bird LLP

(57) **Abstract**

A yaw drive comprises a drive yaw motor, preferably a direct drive yaw motor, arranged to drive a nacelle of a wind turbine installation to rotate about an essentially vertical axis A. The yaw drive further comprises a first yaw brake and a second yaw brake, preferably three or more such yaw brakes. Each of these yaw brakes is arranged to apply a braking force on the nacelle. The first and second yaw brakes are arranged to apply different braking forces on the nacelle.

## Description

The present invention relates to a Yaw Drive for a Wind Turbine Installation and a method to operate the Yaw Drive. The invention can be used advantageously with a new and an existing wind turbine installation.

Some known wind turbine installations have a tower, a nacelle rotatably supported by the tower, a generator arranged inside the nacelle and a turbine rotor having several rotor blades. The turbine rotor is connected with the generator such that rotational power caused by wind can be converted into electrical power by the generator. Some of these wind turbine installations have a yaw drive arranged to rotate the nacelle about an essentially vertical axis A.

### Problem & Solution

The longevity of some of these wind turbine installations is sometimes considered as inadequate.

An object is to provide a wind turbine installation having an improved service life.

This is achieved by a yaw drive for a wind turbine installation according to claim 1 (first aspect), a yaw drive according to claim 2 (second aspect), and a method to operate the yaw drive (third aspect). Preferred embodiments form the respective subject matter of the dependent claims.

The yaw drive according to the first aspect is suitable for driving a nacelle of a wind turbine installation to rotate about an essentially vertical axis A. The yaw drive according to the first aspect comprises a yaw motor, preferably a direct drive yaw motor, arranged to drive a nacelle of a wind turbine installation to rotate about an essentially vertical axis A. The yaw drive further comprises a first yaw brake and a second yaw brake, preferably two or more such yaw brakes. Each of these yaw brakes is arranged to apply a braking force on the nacelle. The first and second yaw brakes are arranged to apply different braking forces on the nacelle. The yaw brakes can be controlled independently.

The angular position of the nacelle about axis A can be referred to as the yaw angle α. The yaw angle can be measured between an axis B, about which the turbine rotor can rotate, and the wind velocity vector *̅V̅*̅₃̅ of the wind streaming about the nacelle or about the turbine rotor. The yaw angle can be measured in a plane perpendicular to axis A. The component of the velocity vector *̅V̅*̅₃̅ perpendicular to axis A can indicate or define the yaw angle 0°. A projection of axis B onto the plane perpendicular to axis A (projected axis B) can form a ray of the yaw angle. While axis A can be essentially vertical, axis B need not be horizontal. Axes A and B can form an angle δ between 80° and 100°.

When the wind velocity vector changes its direction the nacelle can be driven by the yaw drive to rotate about axis A to reduce the yaw angle. A jerk *j* [°/s³] can occur during operation of the yaw drive and repeated jerks stress the mechanical components and reduce the service life of the wind turbine installation. By altering the braking forces simultaneously, such jerks can be reduced. To this end, the yaw brakes are arranged to apply different braking forces on the nacelle. One of the yaw brakes can release earlier than the other yaw brake. The braking force applied by the first yaw brake (first braking force) can be smaller than its maximum braking force but still greater than 0 while the braking force applied by the second yaw brake (second braking force) is 0. The yaw drive allows smoother yawing, particularly by controlled slippage, whereby the object is achieved.

The yaw drive according to the second aspect is suitable for driving a nacelle of a wind turbine installation to rotate about an essentially vertical axis A. The yaw drive comprises a yaw motor, preferably a direct drive yaw motor, arranged to drive a nacelle of a wind turbine installation to rotate about an essentially vertical axis A. A stator of the yaw motor is mechanically connectable with a tower of the wind turbine installation or with an inner wall of the tower. The stator does not move during operation. This yaw drive can be combined with the first and second yaw brake explained above.

Since the stator is mechanically connected with the tower, the play in the drive train for rotating the nacelle is reduced. This may help to reduce jerks when repeatedly driving the nacelle to rotate and can increase the service life of the wind turbine installation. Further, the yaw drive according to the second aspect can help to reduce transmission losses. Additionaly, the stress level on other components of the wind turbine installation can be reduced.

### Preferred embodiments

Preferred embodiments explained in the following can be combined with each other, advantageously, unless stated otherwise.

Preferably, the yaw motor is a direct drive yaw motor, preferably directly connected with the nacelle or with a yaw base, which can be a section of the nacelle. This can help to reduce response times, particularly compared with a motor and gear box arrangement. A further advantage is an improved generation of electrical energy by adjusting the yaw angle α in a shorter time period making use of the direct drive and the independent yaw brakes.

The yaw brakes can be arranged to be activated and/or deactivated fully and/or partially, i.e. 25 to 75% of the full braking force, for applying a respective braking force. The yaw brakes can be arranged to apply a fraction or part, i.e. 25 to 75%, of the respective full braking force. This can help to control the slippage of the respective brake disc on which the full or partial braking force is applied.

The yaw motor can have temperature monitoring sensors, air gap sensors and/or vibration/oscillation sensors. The yaw motor can be without any roller bearing between stator and rotor. Guiding rollers or sliding pads of the yaw motor can increase the stability between the rotor and the stator of the yaw motor.

Preferably, the yaw drive comprises three or more yaw brakes which can be actuated independently. This may help to reduce the overall cost and/or to increase the reliability.

A stator of the yaw motor can be arranged to be mechanically connectable with a tower of the wind turbine installation or with an inner wall of the tower of the wind turbine installation. A rotor of the yaw motor can be mechanically connected directly with the nacelle or with a yaw base of the nacelle.

The yaw brakes can be arranged to be actuated independently, preferably wherein the first yaw brake can be actuated independently from the second yaw brake.

Preferably, the yaw brakes are mechanically connectable with a rotor of the yaw motor or with a tower of the wind turbine installation or with an inner wall of the tower.

The yaw drive can have a first brake disc which is mechanically connectable with a rotor of the yaw motor or with a tower of the wind turbine installation or with the inner wall of the tower. The first brake disc can be positioned and arranged to engage with one or more of the yaw brakes. Alternatively, the first brake disc is mechanically connectable with any of the rotating parts of the nacelle.

The yaw drive can have a second brake disc which is mechanically connectable with a rotor of the yaw motor or with a tower of the wind turbine installation or with the inner wall of the tower. The second brake disc can be positioned and arranged to engage with one or more of the yaw brakes. The second brake disc can be spaced apart from the first brake disc along axis A. Alternatively, the second brake disc is mechanically connectable any of the rotating parts of the nacelle. The second brake disc can increase the reliability of the yaw drive.

One or more of the brake discs can have angular segments which can form the respective brake disc when connected with each other.

Alternatively, the yaw brakes are mechanically connected with the top tower segment and the brake disc(s) with the rotor of the yaw motor.

The first yaw brake can be positioned to engage with the first brake disc. The second yaw brake can be positioned to engage with the second brake disc. The first and second yaw brakes can be positioned, preferably at different angular positions with respect to axis A, to engage with the first brake disc.

The rating of the individual yaw brakes could be different. Further, the yaw brakes can be of different types like hydraulic, electro-magnetic, electro-mechanical, active brake, passive brake or a combination thereof. Preferably, the yaw brakes are electro-magnetic. The maximum braking force of the first yaw brake can be different from maximum braking force of the second yaw brake.

The liners or brake pads of the yaw brakes could be of different material. Further, contact pattern and surface area of the liners, which can be in contact with the brake disc, can also be-different. The different liners or brake pads of the yaw brakes can help to apply different braking forces, particularly different maximum braking forces.

The yaw brakes can be positioned below a yaw bearing of the wind turbine installation, the yaw bearing being arranged to rotatably support the nacelle relative to a tower of the wind turbine installation. A bearing ring of the yaw bearing can have two or more angular ring segments arranged to align with a circle about axis A. Each of the segments can extend along an arc length about axis A. This can help to reduce the effort while assembling the wind turbine installation.

The yaw drive can comprise a first group of yaw brakes and a second group of yaw brakes spaced apart along axis A from the first group of yaw brakes.

A rotor of the yaw motor can be arranged to be mechanically connected with the nacelle. The rotor can be rotatable relative to the stator. The rotor can comprise a motor shaft. The motor shaft can be hollow to permit access to the nacelle. The motor shaft can have a climbing device, particularly arranged inside a hollow of the motor shaft, preferably permitting access to the nacelle.

The motor shaft can comprise two or more, preferably shell shaped, shaft segments which can be mechanically connected with each other to form the motor shaft. The rotor can be segmented in a longitudinal direction or both radially and longitudinally.

The rotor of the yaw motor can comprise two or more coil winding segments which can be mechanically connected with one or more of the shaft segments. Each of the coil winding segments can have several conductors, wherein the conductors of any coil winding segment are electrically connected with the conductors of the coil winding segments on both sides of that particular coil winding segment, preferably after connecting all coil winding segments on one of the shaft segments.

The stator of the yaw motor can comprise several magnetic elements arranged circumferentially about axis A. Each of the magnetic elements can be a permanent magnet or an electrically excitable pole shoe. The stator can comprise a mounting flange extending about axis A. This mounting flange can be connectable with a tower top segment of the wind turbine installation. The stator can have several mounting brackets each arranged to releasably accept one of the magnetic elements. Each of the mounting brackets can be mechanically connected with the mounting flange. Each of the mounting brackets can hold more than one permanent magnets or pole shoes of smaller size. This cost and effort of repairing these can be smaller.

The rotor of the yaw motor can have several magnetic elements arranged circumferentially about axis A. Each of the magnetic elements can be a permanent magnet or an electrically excitable pole shoe. The rotor can have a mounting flange extending about axis A. The rotor can have several mounting brackets each mechanically connectable with the mounting flange and each arranged to releasably accept one of the magnetic elements.

The above designs of the rotor may reduce the manufacturing complexity by splitting the rotor winding into small size coil winding segments. Smaller equipment can be used for impregnation because of the reduced size of the coil winding segment. Further, the handling, manufacturing, assembly and maintenance time can be reduced. In case of failure, only the affected coil winding segment needs to be repaired or replaced, which reduces the maintenance cost. The handling of the coil winding segment during maintenance can be done with smaller handling equipment and a higher capacity crane may not be needed. The rotor of the yaw motor, on account of its segments, can be replaced or repaired on top of tower without taking entire rotor to the ground. Further the effort and cost to produce the rotor can be reduced.

The stator of the yaw motor can comprise two or more coil winding segments, and a first coil winding segment can be electrically connected with a second coil winding segment. This can help to reduce the effort while assembling the wind turbine installation. Further, this can serve to simplify maintenance or repair of the yaw motor.

As the permanent magnet is the part of the stator of the direct drive yaw motor, higher weight simple ferrite magnets can be used in the stator instead of more expensive Neodymium Iron Boron or Samarium Cobalt or Alnico magnet. The permanent magnet is electrically excitable and electrically de-magnetisable.

The several magnet mounting brackets can be made from stainless steel or aluminium because both stainless steel and aluminium are high strength materials required to retain the position of the magnet. These materials are also not affected by a magnetic field. However, the several magnet mounting brackets can also be made of another high strength material which is not affected by the magnetic field.

The rotor and/or the stator can be segmented in a longitudinal direction or both radially and longitudinally.

The yaw motor need not have a bearing, at least no roller bearing. One or more guiding rollers or sliding pads can be arranged to restrict the oscillation of the yaw motor shaft. Preferably one or more of the guiding rollers or sliding pads are mechanically connected with the stator of the yaw motor, the tower or any other stationary part of the tower.

A preferred wind turbine installation comprises a yaw drive as explained before, a tower, a nacelle rotatably supported by the tower, a generator arranged inside the nacelle, a turbine rotor having several rotor blades, wherein the turbine rotor is connected with the generator such that rotational power caused by wind can be converted by the generator into electrical power. The turbine rotor is arranged to rotate about an axis B. The nacelle is arranged to rotate about an essentially axis A. Axes A and B can form an angle between 80° and 100°.

The wind turbine installation can be arranged such that the nacelle rotates while the turbine rotor rotates. This can help to increase the output of the wind turbine installation.

The wind turbine installation can be arranged such that the first and/or second braking force can be increased or reduced while or before the nacelle rotates. This can help to increase the wind turbine installation's output.

The yaw brakes can be positioned below a yaw bearing of the wind turbine installation, the yaw bearing being arranged to rotatably support the nacelle relative to a tower of the wind turbine installation.

The wind turbine can have an electronic control circuit including a microprocessor and arranged inside the nacelle. The control circuit can control the yaw brakes independently. Sensors can be included in the electronic control circuit. The wind turbine can have a slip ring device electrically connected with the electronic control circuit. The slip ring device is an electromechanical device, has a stationary and a rotating member, and allows to transmit power and electrical signals from the stationary to the rotating member or vice versa. First cables connect the control circuit with the rotating member. The stationary member is held by the tower. Second cables lead from the stationary member to other electrical devices of the wind turbine installation which are mechanically independent of the nacelle. When the nacelle rotates, the cables are not twisted excessively. Thus, the slip ring device can facilitate the nacelle to rotate relative to the tower. The slip ring device can serve to increase the longevity of the cables.

The electronic control circuit, also referred to as "measurement and control system" can take into account the wind velocity, pressure, current wind direction, expected wind direction and its intensity, wind force, other wind parameters, pitch angle of the individual blade, rpm of the turbine rotor, torque of the generator, the actual angle of attack of the individual blade, the bending and untwisting of the blade, deflection of the blade, and the maximum stress level that is allowed in the design of the wind turbine, wake measurement, position of the nearby wind turbines and decide the optimum yaw position of the wind turbine. This can help to affect and/or account for wake patterns and deflection of one of the blades, particularly for optimum position of the wind turbine.

The control circuit can be part of or can involve a closed loop including the yaw motor and yaw brakes (actuators), sensors for the actual nacelle position, for the actual yaw angle.

By doing so, the wind turbine rotor can be set at better yaw position which further improves the power generation and reduces the stresses of the individual blade and corresponding components of the wind turbine rotor. The control circuit can also take into account the input signal from the wind vane, an anemometer of the wind turbine installation, a wind lidar and/or other sensors and/or the signal from other wind turbine for deciding the optimum yaw position of the wind turbine. This arrangement reduces the load on the wind turbine components.

A preferred wind turbine installation has a yaw bearing arranged to support the nacelle rotatably relative to the tower, wherein a bearing ring of the yaw bearing can have two or more angular segments arranged to extend about axis A. The wind turbine installation can have a yaw bearing. The yaw brakes and/or the yaw motor including its rotor and stator can be positioned below the yaw bearing.

A method according to the second aspect serves to operate a yaw drive or wind turbine installation as explained before. The method comprises the following step
- S1: reducing or suspending a first braking force applied by the first yaw brake, preferably to the first brake disc, while a turbine rotor of the wind turbine installation rotates, particularly at a first point in time.

Preferably, the first braking force is set to less than 25% or within a range of 25% to 75% of the first yaw brake's full braking force. This can help to reduce or avoid a jerk and to conserve the mechanical parts of the wind turbine installation.

The method can include that the nacelle rotates about axis A while the wind turbine rotor rotates about axis B. This can offer the advantage of an increased output since the generator keeps operating.

The method can comprise the step
- S2: increasing the first braking force, preferably after step S1.

Preferably, the first braking force is set to more than 50% or more than 75% of the first yaw brake's full braking force. This can help to stop the nacelle's rotation.

Step S1 or step S2 can performed while a second braking force applied by the second yaw brake is kept constant.

The method can have the step
- S3: reducing or suspending a second braking force applied by the second yaw brake, while a turbine rotor rotates, particularly after step S1 or after step S2.

Preferably, the second braking force is set to less than 25% or within a range of 25% to 75% of the second yaw brake's full braking force. This can help to reduce or avoid a jerk and to conserve the mechanical parts of the wind turbine installation.

The method can include the step
- S4: increasing the second braking force, particularly after step S3.

Preferably, the second braking force is set to more than 50% or more than 75% of the second yaw brake's full braking force. This can help to stop the nacelle's rotation.

The method can comprise the step
- S5: reducing or suspending a third braking force applied by a third yaw brake, particularly after step S1, S2, S3 or after step S4.

This can help to reduce or avoid a jerk and to conserve the mechanical parts of the wind turbine installation.

The method can further involve one or both of the following steps
- S6: reducing or increasing the rotational speed of the yaw motor,
- S7: reducing or increasing the torque provided by the yaw motor.

The point in time of performing step S1, S2, S3, S4 or S5 can depend on a pitch angle of one of the rotor blades, the torque of the yaw motor, the rotational speed of the rotatable shaft, an actual yaw angle of the nacelle respect to axis A, a rotational speed of the turbine rotor or a torque applied by the turbine rotor on a generator of the wind turbine. This can help to reduce or avoid a jerk and to conserve the mechanical parts of the wind turbine installation.

The point in time of performing step S1, S2, S3, S4 or S5 can depend on a velocity vector *̅V̅*̅₃̅ of the wind streaming about the nacelle or turbine rotor. This can help to increase the output of the wind turbine installation.

The method can include that the first, second and/or third braking force is increased when the actual yaw angle and a target yaw angle differ by less than 3°.

Particularly to avoid damage of the wind turbine installation, one or more of steps S1, S2, S3 and S4 can be performed while the nacelle rotates such that the yaw angle is increased (yawing out) or prior to increasing the yaw angle by the yaw motor. This can help to protect the wind turbine installation in case the wind velocity *̅V̅*̅₃̅ exceeds a limit.

The first, second and/or third braking force can decrease while the torque applied by the yaw motor on the nacelle increases.

During yawing, the electronic control circuit can start, stop and control the rotation of the yaw motor as well as independent operation of the yaw brakes depending upon the yawing requirement of the wind turbine in different conditions. The several yaw brakes can actively participate in yawing operation of the wind turbine under appropriate control by the control circuit.

During rest of the nacelle, steady yawing and/or after yawing, the yaw brakes can be activated and/or deactivated fully and/or partially, i.e. 25 to 75%, for applying a braking force as follows:

The yaw drive can adopt a first state in which no braking force is applied on the nacelle nor on the brake disc(s).

The yaw drive can adopt a second state in which the yaw brakes apply the respective full braking force on the nacelle or on the brake disc(s).

The yaw drive can adopt a third state in which the first and second yaw brakes apply different braking forces on the nacelle or on the brake disc(s).

The yaw drive can be arranged/operated such that one of the yaw brakes applies its full braking force, a part, i.e. 25 to 75%, of its full braking force or no braking force on the nacelle or on the brake disc(s) during a specific first period of time, e.g. for a period of 1 to 10 sec.

The yaw drive can be arranged/operated such that another of the yaw brakes applies its full braking force, a part, i.e. 25 to 75%, of its full braking or no braking force on the nacelle or on the brake disc(s) during the first period of time e.g. for a period of 1 to 10 sec, or during a second period of time.

The yaw drive can be arranged/operated such that another of the yaw brakes applies its full braking force, a part, i.e. 25 to 75%, of its full braking or no braking force on the nacelle or on the brake disc(s) during a specific second period of time, wherein the first and second periods of time have a different duration and/or the first and second periods of time begin at different points in time.

The yaw drive can be arranged/operated such that the first and second yaw brakes each apply the respective full braking force, a part, i.e. 25 to 75%, of the respective full braking or no braking force on the nacelle or on the brake disc(s) for a specific first period of time, e.g. for a period of 1 to 10 sec.

The yaw drive can be arranged/operated such that the first and second yaw brakes each apply the respective full braking force, a part, i.e. 25 to 75%, of the respective full braking or no braking force on the nacelle or on the brake disc(s) one after another in a specific sequence for a specific period of time.

The yaw drive can be arranged/operated such that the yaw brakes mounted at different specific locations can be activated and/or deactivated fully and/or partially, i.e. 25 to 75%, for braking force one after another in a sequence for the specific period of time, e.g. for a period of 1 to 10 sec.

The yaw drive can be arranged/operated such that first braking force can be reduced before the second braking force.

The yaw drive can be arranged/operated such that first braking force can be increased before the second braking force.

During the aforementioned operation of the yaw brakes, electrical parameters of the yaw motor can be changed frequently to smoothly complete the yawing operation. Simultaneous operation of the yaw motor and several yaw brakes with respect to each other varies as per the measured parameters received from the control circuit.

The yaw brakes can be activated and/or deactivated fully and/or partially, i.e. 25 to 75%, for applying a braking force. The yaw brakes can apply a fraction or part, i.e. 25 to 75%, of the respective full braking force. This can help to control the slippage of the respective brake disc on which the full or partial braking force is applied.

The yaw brakes can be activated fully or partially or deactivated for a specific period of time. One of the yaw brakes can apply a braking force different from that another of the yaw brakes. The yaw brakes receive command (signals) and power from the control circuit..

With the electronic control circuit, the yaw brakes can be operated like piano keys. The operational frequency of each brake in simultaneous and or sequential operation with respect to each other varies as per the measured parameters received from the control circuit.

Individual yaw brakes can be activated and/or deactivated fully and/or partially, i.e. 25 to 75% of the full braking force, for applying a braking force for the particular time in any of the aforementioned combinations even during any single event of the yawing of the wind turbine in any direction.

Besides, the braking force applied by each yaw brake can be separately controlled in any of the aforementioned combinations even during any single event of the yawing of the wind turbine in any direction.

Furthermore, in any of the aforementioned combinations even during any single event of the yawing of the wind turbine in any direction, the individual brake can be opened and or closed partially, i.e. 25 to 75% of the full braking force, in order to allow the particular rotational smooth slippage which allows to complete the yawing smoothly and safely; not allowing yawing to overshoot.

In addition to that, such activation and/or deactivation of the yaw brakes, parallel to the rotation of the yaw motor, could take place several times with any of the aforementioned combinations even during any single event of the yawing of the wind turbine in any direction.

In any of the aforementioned combinations, the activation and/or the deactivation of the yaw brakes in order to control the braking force and rotational slippage are decided considering the torque applied by the yaw motor and the speed (rpm) of the yaw motor.

So with the yaw drive, at any point of time during yawing operation of the wind turbine, there can be any combination of below mentioned operations during yawing of the wind turbine:

Usage of the different braking forces for different yaw brakes which is independently decided for each of the yaw brake.

Full and/or partial activation, i.e. 25 to 75% of the full braking force, and/or deactivation of different combination of the yaw brakes which are located at different locations.

Time/period during which different combination of the yaw brakes are fully and/or partially activated or deactivated.

Full and/or partial activation, i.e. 25 to 75% of the full braking force, and/or deactivation of different combination of the yaw brakes in particular sequence; the sequence is decided based on various operating and measured parameters.

Besides, full and/or partial activation, i.e. 25 to 75% of the full braking force, and/or deactivation or a different combination of the yaw brakes is decided based on the torque applied by yaw motor and the speed of the yaw motor.

Using micro digital yaw motion control with sequential activation and/or deactivation of different combination of the yaw brakes, the yawing of the wind turbine can be done fast, safe, smooth and without jerks.

Combined operation of the yaw motor and several yaw brakes can reduce the sudden jerks and impact load on wind turbine components during yawing of the wind turbine, which eventually allows to optimize the design of the wind turbine components.

Further to that, the combined operation of the yaw motor and several yaw brakes allow to use differential rotational velocity of the yaw motor while yawing even in single event of yawing which further allow to decelerate the rotation of the yaw motor when the turbine is closer to desired position. This helps to complete the yawing of the wind turbine smoothly.

For fast yawing, the yaw motor's torque is increased and the yaw brakes are released. For limiting the rotational speed of the nacelle about axis A, i.e. to limit dα/dt, particularly when the load caused by the wind aiming to rotate the nacelle or the wind velocity exceeds a limit (emergency procedure), at least one of the yaw brakes applies a partial braking force, i.e. 25 to 75% of its full braking force. In this case, the torque from the yaw motor can be smaller than during fast yawing. This helps to achieve controlled slippage of between the yaw brake and the respective brake disc.

As the braking forces/torque required to carry out the yawing in clockwise direction and counter clockwise direction is different depending upon the different wind parameters and rpm of the wind turbine, different braking forces/torque can be applied using the yaw drive, in different yawing directions. This arrangement will reduce the sudden jerk and impact load on wind turbine components during yawing of the wind turbine.

In addition to that, the yaw drive can serve to also reduce the load on the wind turbine by yawing out, particularly in case of emergency, particularly when the wind velocity exceeds a limit. The yaw out direction depends on wind direction and orientation of blades rotation, targeting minimum torque requirement to yaw out. Preferably, when the yaw brakes have permanent magnets, an emergency "Yaw out" can occur without electrical power. The yawing motion can be controlled to be smoother.

By using the yaw drive with the slip ring device for yawing, the turbine can achieve an improved yaw position without losing the electrical power generation. Irrespective of the yawing position of the wind turbine, by using the yaw motor and several yaw brakes in combination with cable twist free mechanism for yawing, the wind turbine can be quickly and smoothly brought in to an optimum yawing position; similarly, in case of emergency, the wind turbine can also be quickly and smoothly yaw out.

Further to that, the yaw motor together with several yaw brakes can also be used for one of the aforementioned different combinations to actively/dynamically manage the wake, particularly for wake steering.

(wake steering) According to a preferred method (wake steering), the yaw drive can be operated to keep the yaw angle, or the angle between axis B and the wind velocity vector *̅V̅*̅₃̅ of the wind streaming about the nacelle or rotor, different from 0°, preferably greater than |3°|. To this end, the yaw motor is stopped (S6) and at least one of the yaw brakes is set to apply a braking force (S2 and/or S4), particularly to apply 75% to 100% of the respective full braking force. This can help to direct the wake or vortex behind/downstream the wind turbine installation.

In another preferred method (wake steering 2), the yaw motor is activated (S6 and/or S7) repeatedly such that the yaw angle changes repeatedly, preferably while remaining smaller than |5°|. Further, step S1 and one or more of steps S2 to S4 are performed. Thereby, axis B can be set repeatedly and can oscillate about yaw angle 0°. This can help to diffuse the vortex behind the wind turbine installation having the yaw drive.

The wind turbine installation including the yaw drive (first wind turbine installation) can be positioned in the vicinity or upstream of a second wind turbine installation. The two wind turbine installations can be spaced apart less than 300 m. The tower of the second wind turbine installation can be positioned within an angle β of 30°, the vertex of which angle β coinciding with axis A of the first wind turbine installation and the wind velocity vector *̅V̅*̅₃̅ being aligned with a bisecting line of angle β. In these cases, the output of the other wind turbine installation may be improved by wake steering.

An existing wind turbine installation can be refurbished with a yaw drive as explained above. This can help to increase the longevity of the existing wind turbine installation.

Smart yawing of the wind turbine installation can also be done by using a combination of the yaw motor, yaw gearbox, yaw bearing or yaw gear rim with radial and axial sliding pad together with several yaw brakes.

### A preferred wind turbine installation

A preferred wind turbine installation has a yaw drive including a yaw motor arranged to drive the nacelle to rotate about an essentially vertical axis A, a first yaw brake and a second yaw brake each arranged to apply a braking force to the nacelle. The first and second yaw brakes are arranged to be able to apply different braking forces on the nacelle. Preferably, the yaw motor is a direct drive yaw motor.

The nacelle is rotatably supported on a tower having a top tower segment. A yaw bearing facilitates rotation of the nacelle relative to the tower. The outer ring is mechanically connected with the top tower segment. The inner ring is mechanically connected with a yaw base which is mechanically connected with the nacelle. The yaw base can be a section of the nacelle.

The yaw motor has a stator mechanically connected with the tower top segment. A rotor of the yaw motor is mechanically connected with the yaw base and with the yaw brakes. A brake disc is mechanically connected with a tower top segment. The yaw brakes can each apply braking force on the brake disc. They are arranged to apply different braking forces. The yaw motor stator, the yaw brakes and the brake discs are arranged below the yaw bearing.

An electronic control circuit arranged inside the nacelle has a component arranged to control the pitch drives which are arranged to change the pitch angle of the respective rotor blade. Another component of the control circuit is also arranged to control the yaw motor and the yaw brakes. A cable harness connecting the electronic control circuit with the yaw motor and the yaw brakes are not shown. Further, a slip ring device electrically connecting the first section of the cable harness with a second section of the cable harness is not shown either.

The rotor of the yaw motor is directly coupled with the yaw base which is further connected with the nacelle. The yaw base can just be a section of the nacelle. The yaw base is connected with the rotating ring of the yaw bearing. The yaw base rests on the rotating ring. The stationary ring of yaw bearing is connected with the tower top section. The stator of the direct drive yaw motor is also mounted on the tower top section. The rotor directly rotates the entire nacelle during yawing of the nacelle and turbine rotor and the nacelle rests on the rotating ring of the yaw bearing. The rotor of the yaw Motor directly rotates the entire nacelle during yawing, which may reduce transmission losses and can reduce the stress level on other components of the wind turbine installation.

The electronic control circuit, also referred to as the measurement and control system, controls start, stop and the rotation of the yaw motor depending on the yawing requirement with reference to various operating conditions and measured parameters. Further, the measurement and control system also controls the operation of the individual yaw brakes. The combined operation of the yaw motor and the yaw brakes controls the rotation of the nacelle with reference to axis A or tower axis. The yaw brakes apply braking forces on the brake disc which is directly mounted on the rotor of the yaw motor. Alternatively, the brake disc can also be mounted on any of the rotating part of the nacelle. There could also be a several brake disc in a turbine with reference to different mounting arrangements of the yaw brakes.

The yaw brakes can be mounted at various and different locations on the outer diameter of the yaw motor shaft. The yaw brakes can be mounted at different locations in longitudinal direction with reference to the yaw motor's rotational axis or axis A. Further, the yaw brakes can also be mounted both at different radial and axial locations with respect to axis A. Two or more yaw brakes can have the same angular position with respect to axis A but different axial positions when mounted on outer periphery of the yaw shaft. The yaw brakes can be mounted directly on the motor shaft or can be mounted on the motor shaft through mounting brackets. The brake disc can be mechanically or materially connected directly with the tower top segment or a mounting bracket. The brake disc could also be integrated with the tower top segment.

The preferred wind turbine installation has a direct drive yaw motor comprising the rotor and the stator. The yaw motor can have temperature monitoring sensors, air gap sensors, vibration/oscillation sensors. The direct drive yaw motor can be without any roller bearing. Guiding rollers or sliding pads of the yaw motor can increase the stability between rotating and stationary parts of the yaw motor. Thereby, the stability between rotating and stationary parts can be increased. Guiding rollers and sliding pads can be mounted through brackets, preferably which can hold or support or fix one of the yaw brakes.

The direct drive yaw motor is combined with yaw brakes and brake discs all arranged inside the tower top segment. Only a part of the yaw motor shaft projects beyond the tower top segment. The stator of the yaw motor, the yaw brakes and brake discs are below the yaw bearing. Only a part of the yaw motor shaft projects beyond the yaw bearing.

The motor shaft of the rotor of the yaw motor is preferably hollow and a climbing arrangement can be arranged inside the motor shaft allows access to the nacelle. Alternatively, the motor shaft can be solid.

The motor shaft can comprise several shaft segments, which are smaller and lighter than a single piece motor shaft. The several shaft parts form the motor shaft when mechanically or materially connected with each other. The shaft segments can help to reduce the manufacturing complexity, the handling effort and/or the time for manufacturing, assembly and maintenance. If a shaft segments fails, only the segment needs to be repaired or replaced. Handling of the shaft segments during maintenance can be done using the small size handling equipment and a higher capacity crane is not needed.

The winding of the rotor is split into the several coil winding segments. The several coil winding segments are materially or mechanically connected directly on the shaft segment. Alternatively, the several coil winding segments can be connected on the shaft segment through mounting brackets. Each coil winding segment has several conductors. The material of the conductor could be preferably Copper or Aluminium. The design of coil winding segments and the shaft segment are such that any coil winding segment can be individually disconnected from the shaft segment during repair.

After connecting all coil winding segments on the shaft segment, the conductors of any coil winding segment are electrically connected with the conductors of the coil winding segments on both sides of that particular coil winding segment. A preferred electrical connection is with a 3-phase 120° phase shift; either single layer or several layer lap or wave winding.

The winding of the rotor is split into the several coil winding segments. This may reduce the manufacturing complexity by splitting the rotor winding into small size coil winding segments. Smaller equipment can be used for impregnation because of the reduced size of the coil winding segment. Further, the handling, manufacturing, assembly and maintenance time can be reduced. In case of failure, only the affected coil winding segment needs to be repaired or replaced, which reduces the maintenance cost. The handling of the coil winding segment during maintenance can be done with smaller handling equipment and a higher capacity crane is not needed. The rotor of the yaw motor, on account of its segments, can be replaced or repaired on top of tower without taking entire rotor to the ground. Further the effort and cost to produce the rotor can be reduced.

The stator of the direct drive yaw motor comprises a mounting flange, several permanent magnets and several magnet mounting brackets. The several magnet mounting brackets can be made from stainless steel or aluminium because both stainless steel and aluminium are high strength materials required to retain the position of the magnet. These materials are also not affected by a magnetic field. However, the several magnet mounting brackets can also be made of another high strength material which is not affected by the magnetic field.

Each permanent magnet is mounted on the individual bracket. Each individual magnet mounting bracket has preferably one magnet, but can have several small size magnets mounted on the magnet mounting bracket. The magnet mounting brackets having permanent magnets can be connected with the mounting flange, preferably mechanically. The mounting flange is mechanically or materially connected with the tower top segment. As the permanent magnet is the part of the stator of the direct drive yaw motor, higher weight simple ferrite magnets can be used in the stator instead of more expensive Neodymium Iron Boron or Samarium Cobalt or Alnico magnet. The permanent magnet is electrically excitable and electrically de-magnetisable.

The stator of the direct drive yaw motor is split into several magnet mounting brackets having permanent magnets. The manufacturing complexity can be reduced by splitting the stator into small size several magnet mounting brackets, each having a magnet. Smaller equipment can be used for adhesive curing (oven) because of the reduced size of the magnet and magnet mounting bracket. The time and effort for handling, manufacturing, assembly and maintenance can be reduced.

In case of failure, only the affected magnet needs to be repaired or replaced, which reduces the maintenance cost. The bracket having the magnet can be easily disassembled from the mounting flange. Handling of the magnet mounting bracket with a permanent magnet during maintenance can be done using the smaller handling equipment without a higher capacity crane. The stator can be replaced or repaired on top of tower without taking entire stator to the ground.

Instead of permanent magnets, several electrically excitable pole shoes can be used for the stator. These pole shoes are individually mounted directly on the flange or can be mounted on the flange through pole shoe mounting brackets. The pole shoes are electrically connected back to back with each other. In case of failure, the affected pole shoes are individually replaceable or repairable on top of the tower.

The rotor and the stator could also be segmented in longitudinal direction or both in radial and longitudinal direction.

The rotor can also be made with several permanent magnets or electrically excitable pole shoes. These can be mounted directly on the yaw motor shaft. Alternatively, the permanent magnets or electrically excitable pole shoes can be held in the mounting brackets, which can be mounted directly on the direct drive yaw motor shaft. This can be combined with the stator being made with several coil winding segments having conductors. The stator's several coil winding segments are directly mounted on the tower top segment. Alternatively, the several coil winding segments can also be mounted on the tower top segment through mounting brackets.

### A preferred operating method

At low wind velocities, low RPM of the wind turbine rotor and/or low stress on the rotor or wind turbine installation, one or more of the following operating states can occur:

| # | Time/duration | Yaw motor | Yaw brake 1 | Yaw brake 2 | Yaw brake ... | Yaw brake n |
|---|---|---|---|---|---|---|
| 1 | During initial yawing | Low RPM, higher torque (M) | No braking (braking force =0) | No braking | No braking | No braking |
| 2 | During yawing | High RPM, higher M | No braking | No braking | No braking | No braking |
| 3 | While terminating yawing | Low RPM, Low M | Partial or no braking (force>0) | Partial or no braking | Partial or no braking | Partial or no braking |
| 4 | Yawing stopped | Stopped | Full braking force | Full braking | Full braking | Full braking |

At moderate wind velocities, moderate RPM of the wind turbine rotor and/or moderate stress on the rotor or wind turbine installation, one or more of the following operating states can occur:

| # | Time/duration | Yaw motor | Yaw brake 1 | Yaw brake 2 | Yaw brake ... | Yaw brake n |
|---|---|---|---|---|---|---|
| 1 | During initial yawing | Low RPM, higher torque (M) | No braking (braking force =0) | No braking | No braking | No braking |
| 2 | During successive yawing | moderate RPM, higher M | No braking | No braking | No braking | No braking |
| 3 | During successive yawing | moderate RPM, higher M | Partial or no braking (force>0) | no braking | no braking | no braking |
| 4 | During successive yawing | moderate RPM, higher M | no braking | Partial or no braking | no braking | no braking |
| 5 | During successive yawing | moderate RPM, higher M | no braking | no braking | Partial or no braking | no braking |
| 6 | During successive yawing | moderate RPM, higher M | no braking | no braking | no braking | Partial or no braking |
| 7 | During successive yawing | moderate RPM, higher M | Partial or no braking | Partial or no braking | no braking | no braking |
| 8 | During successive yawing | moderate RPM, higher M | Partial or no braking | no braking | Partial or no braking | no braking |
| 9 | During successive yawing | moderate RPM, higher M | Partial or no braking | no braking | no braking | Partial or no braking |
| 10 | During successive yawing | moderate RPM, higher M | no braking | Partial or no braking | Partial or no braking | no braking |
| 11 | During successive yawing | moderate RPM, higher M | no braking | Partial or no braking | no braking | Partial or no braking |
| 12 | During successive yawing | moderate RPM, higher M | no braking | no braking | Partial or no braking | Partial or no braking |
| 13 | During successive yawing | moderate RPM, higher M | no braking | Partial or no braking | Partial or no braking | Partial or no braking |
| 14 | During successive yawing | moderate RPM, higher M | Partial or no braking | no braking | Partial or no braking | Partial or no braking |
| 15 | During successive yawing | moderate RPM, higher M | Partial or no braking | Partial or no braking | no braking | Partial or no braking |
| 16 | During successive yawing | moderate RPM, higher M | Partial or no braking | Partial or no braking | Partial or no braking | no braking |
| 17 | During successive yawing | moderate RPM, higher M | Partial or no braking | Partial or no braking | Partial or no braking | Partial or no braking |
| 18 | While terminating yawing | Low RPM. Low M | Partial or no braking (force >0) | Partial or no braking | Partial or no braking | Partial or no braking |
| 19 | Yawing stopped | Stopped | Full braking | Full braking | Full braking | Full braking |

At high wind velocities, high RPM of the wind turbine rotor and/or high stress on the rotor or the wind turbine installation, one or more of the following operating states can occur:

| # | Time/duration | Yaw motor | Yaw brake 1 | Yaw brake 2 | Yaw brake ... | Yaw brake n |
|---|---|---|---|---|---|---|
| 1 | During initial yawing | Low RPM, moderate torque (M) | Partial or no braking (force >0) | Partial or no braking | Partial or No braking | Partial or No braking |
| 2 | During successive yawing | moderate RPM, moderate M | No braking | No braking | No braking | No braking |
| 3 | During successive yawing | moderate RPM, moderate M | Partial or no braking (force >0) | no braking | no braking | no braking |
| 4 | During successive yawing | moderate RPM, moderate M | no braking | Partial or no braking | no braking | no braking |
| 5 | During successive yawing | moderate RPM, moderate M | no braking | no braking | Partial or no braking | no braking |
| 6 | During successive yawing | moderate RPM, moderate M | no braking | no braking | no braking | Partial or no braking |
| 7 | During successive yawing | moderate RPM, moderate M | Partial or no braking | Partial or no braking | no braking | no braking |
| 8 | During successive yawing | moderate RPM, moderate M | Partial or no braking | no braking | Partial or no braking | no braking |
| 9 | During successive yawing | moderate RPM, moderate M | Partial or no braking | no braking | no braking | Partial or no braking |
| 10 | During successive yawing | moderate RPM, moderate M | no braking | Partial or no braking | Partial or no braking | no braking |
| 11 | During successive yawing | moderate RPM, moderate M | no braking | Partial or no braking | no braking | Partial or no braking |
| 12 | During successive yawing | moderate RPM, moderate M | no braking | no braking | Partial or no braking | Partial or no braking |
| 13 | During successive yawing | moderate RPM, moderate M | no braking | Partial or no braking | Partial or no braking | Partial or no braking |
| 14 | During successive yawing | moderate RPM, moderate M | Partial or no braking | no braking | Partial or no braking | Partial or no braking |
| 15 | During successive yawing | moderate RPM, moderate M | Partial or no braking | Partial or no braking | no braking | Partial or no braking |
| 16 | During successive yawing | moderate RPM, moderate M | Partial or no braking | Partial or no braking | Partial or no braking | no braking |
| 17 | During successive yawing | moderate RPM, moderate M | Partial or no braking | Partial or no braking | Partial or no braking | Partial or no braking |
| 18 | While terminating yawing | Low RPM. Low M | Partial or no braking (force >0) | Partial or no braking | Partial or no braking | Partial or no braking |
| 19 | Yawing stopped | Stopped | Full braking | Full braking | Full braking | Full braking |

### Exemplary embodiments

Further advantages become apparent to the skilled person from the following exemplary embodiments.

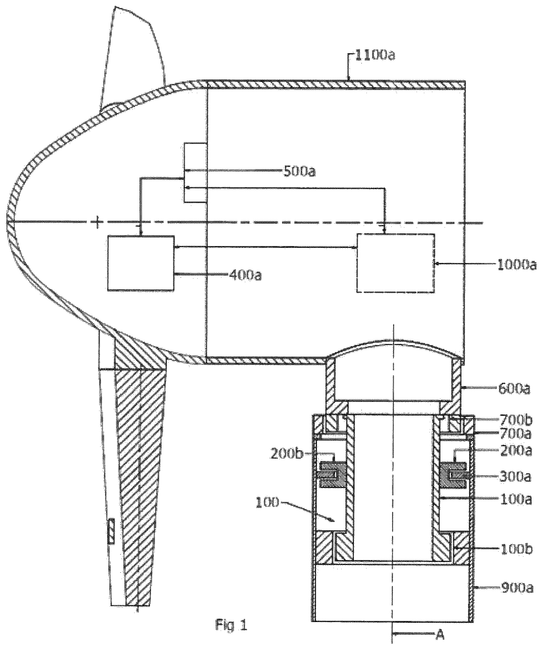

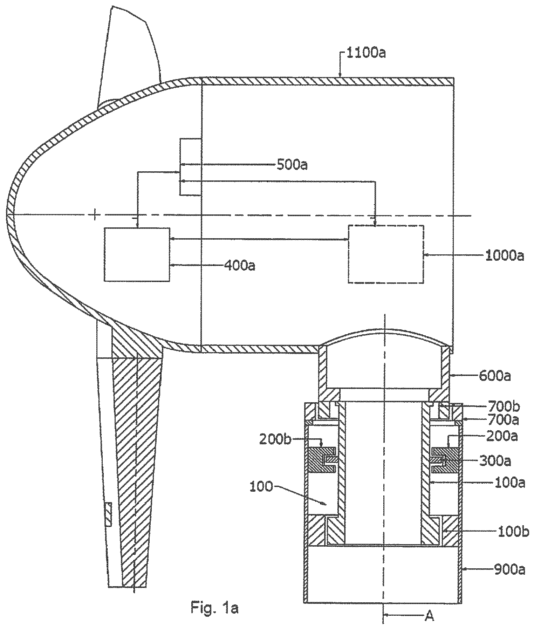

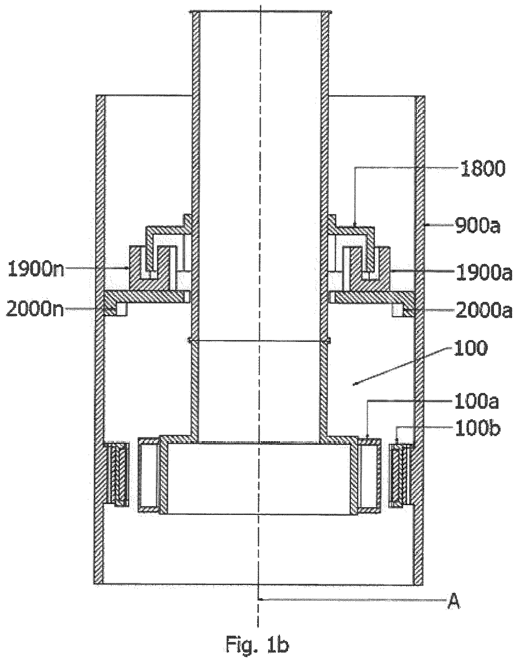

Figure 1 schematically shows components of an exemplary wind turbine installation having a yaw drive including a yaw motor 100, 100a, 100b arranged to drive the nacelle 1100a to rotate about an essentially vertical axis A, a first yaw brake 200a and a second yaw brake 200b each arranged to apply a braking force to the nacelle. The first and second yaw brakes are arranged to be able to apply different braking forces on the nacelle. Preferably, the yaw motor is a direct drive yaw motor.

The nacelle is rotatably supported on a tower, the top segment 900a of which is shown. A yaw bearing 700a, 700b facilitates rotation of the nacelle relative to the tower. The outer ring 700a is mechanically connected with the top tower segment 900a. The inner ring 700b is mechanically connected with a yaw base 600a which is mechanically connected with the nacelle.

The yaw motor has a stator 100b mechanically connected with the tower top segment. A rotor 100a of the yaw motor is mechanically connected with the yaw base and with the yaw brakes. A brake disc 300a is mechanically connected with a tower top segment. The yaw brakes can each apply braking force on the brake disc. They are arranged to apply different braking forces. The yaw motor stator, the yaw brakes and the brake discs are arranged below the yaw bearing.

The electronic control circuit arranged inside the nacelle has a component 400a arranged to control the pitch drives which are arranged to change the pitch angle of the respective rotor blade. Further components 500a, 1000a of the electronic control circuit are electrically connected with component 400a. Component 1000a is also arranged to control the yaw motor and the yaw brakes. A cable harness connecting the electronic control circuit with the yaw motor and the yaw brakes are not shown. Further, a slip ring device electrically connecting the first section of the cable harness with a second section of the cable harness is not shown either.

The rotor 100a of the yaw motor 100 is directly coupled with the yaw base 600a which is further connected with the nacelle 1100a. The yaw base can just be a section of the nacelle. The yaw base is connected with the rotating ring 700b of the yaw bearing 700. The yaw base rests on the rotating ring 700b. The stationary ring 700a of yaw bearing is connected with the tower top section 900a. The stator 100b of the direct drive yaw motor 100 is also mounted on the tower top section. The rotor 100a directly rotates the entire nacelle during yawing of the nacelle and turbine rotor and the nacelle rests on the rotating ring 700b of the yaw bearing. The rotor of the yaw motor directly rotates the entire nacelle during yawing, which may reduce transmission losses and can reduce the stress level on other components of the wind turbine installation.

The electronic control circuit 400a, 500a, 1000a, also referred to as the measurement and control system, controls start, stop and the rotation of the yaw motor depending on the yawing requirement with reference to various operating conditions and measured parameters. Further, the measurement and control system also controls the operation of the individual yaw brakes. The combined operation of the yaw motor 100 and the yaw brakes 200a, 200b controls the rotation of the nacelle with reference to axis A or tower axis. The yaw brakes apply braking forces on the brake disc 300a which is directly mounted on the rotor 100a of the yaw motor. Alternatively, the brake disc 300a can also be mounted on any of the rotating part of the nacelle. There could also be a several brake disc in a turbine with reference to different mounting arrangements of the yaw brakes.

The yaw brakes 200a, 200b can be mounted at various and different locations on the outer diameter of the yaw motor shaft. The yaw brakes can be mounted at different locations in longitudinal direction with reference to the yaw motor's rotational axis or axis A. Further, the yaw brakes 200a, 200b, ... 200n can also be mounted both at different radial and axial locations with respect to axis A. Two or more yaw brakes can have the same angular position with respect to axis A but different axial positions when mounted on outer periphery of the yaw shaft. The yaw brakes can be mounted directly on the motor shaft 1500 or can be mounted on the motor shaft through mounting brackets (not shown). The brake disc 300a can be mechanically or materially connected directly with the tower top segment 900a or through a mounting bracket (not shown). The brake disc 300a could also be integrated with the tower top segment.

Figure 1a schematically shows another exemplary wind turbine installation which differs from the wind turbine installation of figure 1 by the positions of the yaw brakes and the brake disc. The brake disc 300a is mechanically connected with the rotor 100a of the yaw motor and that yaw brakes 200a, 200b mechanically connected with the tower top segment 900a.

The yaw brakes 200a, 200b, ... 200n can be mounted directly on the tower top segment 900a or through one or more mounting brackets (not shown). The brake disc 300a can be mechanically or materially connected directly with the motor shaft 1500 or through one or more mounting brackets (not shown). The brake disc 300a could also be integrated with the motor shaft 1500.

As shown in figure 1b, another exemplary wind turbine installation can have at least two yaw brakes 1900a, 1900b, .... 1900n mounted, preferably through mounting bracket 2000a, 2000b, ..., 2000n, at different locations with reference to the direct yaw motor's rotational axis or tower axis A, on inner surface of the tower top segment 900a. The yaw brakes can also be mounted at different locations in longitudinal direction with reference to the direct yaw motor's rotational axis or tower axis A. Further, the yaw brakes can also be mounted both at different radial locations and different axial location with reference to the direct yaw motor's rotational axis or tower axis A. Two or more yaw brakes can be mounted on an inner surface of the tower top segment at the same radial position with respect to the direct yaw motor's rotational axis or tower axis A but at different axial positions. The brake disk 1800 can be mechanically or materially connected with the direct yaw motor shaft 1500, preferably through a mounting bracket (not shown). The brake disc can be integrated with the direct yaw motor shaft. The brake disc can be segmented into two or more pieces or segment.

The yaw brakes 1900a, 1900b, .... 1900n can also be mounted, preferably through mounting brackets, on the direct yaw motor shaft 1500. If so, the brake disk 1800 is mounted, preferably through mounting bracket, on an inner surface of the tower top segment 900a.

The yaw brakes 1900a, 1900b, .... 1900n apply the braking force perpendicular to the direct yaw motor's rotational axis or tower axis A; the braking force in radial direction is particularly suitable to apply operational slippage during yawing of the wind turbine. Yaw brakes 200a, 200b, .... 200n and yaw brakes 1900a, 1900b, .... 1900n can be combined in a wind turbine. By using these both brakes, achieve better operational control during yawing of the wind turbine is achieved.

During steady (non-yawing), yawing and after yawing, each of the yaw brakes (200a, 200b, .... 200n) (1900a, 1900b, .... 1900n) can be activated and/or deactivated fully and/or partially for a clamping force with combination of the any of the below options.
1. All the yaw brakes can remain in open condition.
2. All the yaw brakes can remain in closed condition applying full braking force.
3. Any single yaw brake (200a or 200b or any other brake) can be activated and/or deactivated fully and/or partially for a clamping force for the specific period of time.
4. The yaw brakes (200a, 200b, ...) mounted at different locations can be activated and/or deactivated fully and/or partially for clamping force for the specific period of time.
5. All the yaw brakes can be simultaneously activated and/or deactivated fully and/or partially for clamping force for the specific period of time.
6. The individual brake can be activated and/or deactivated fully and/or partially for clamping force one after another in specific sequence for the specific period of time.
7. The particular sets of brakes mounted at different specific location can be activated and/or deactivated fully and/or partially for clamping force one after another in a sequence for the specific period of time.
8. The individual brake mounted at different specific location can be activated and/or deactivated fully and/or partially for clamping force one after another in specific sequence for the specific period of time.
9. The particular sets of brakes mounted at different specific location can be activated and/or deactivated fully and/or partially for clamping force one after another in specific sequence for the specific period of time.

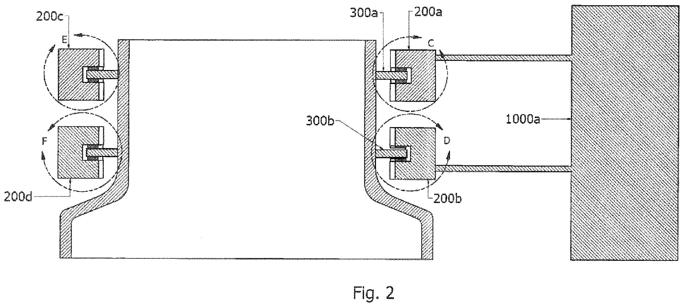

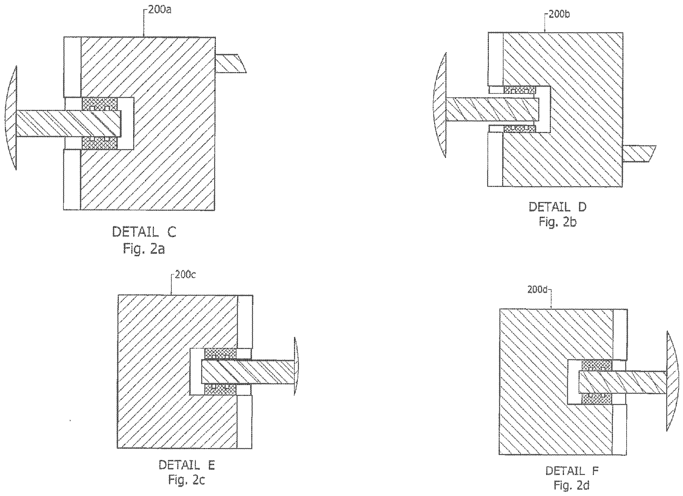

Figure 2 schematically shows parts of another exemplary yaw drive and a component 1000a of the electronic control circuit which is electrically connected with the yaw brakes 200a, 200b. The yaw drive has four yaw brakes 200a, 200b, 200c, 200d which can be mechanically connected with the tower top segment (not shown). The yaw drive has two brake discs 300a, 300b mechanically connected with the rotor of the yaw motor. The brake discs are spaced apart from each other along the longitudinal axis of the rotor. Two of the yaw brakes are arranged such that they can apply braking forces on the first of the brake discs. Two further your brakes are arranged for applying braking forces on the second brake disc. The second brake disc can increase the reliability of the yaw drive.

The exemplary yaw drive can also adopt the following state: yaw brakes 200a, 200d apply the respective full braking force (figures 2a, 2d), yaw brake 200b applies no braking force (figure 2b), and yaw brake 200c applies a part of its full braking force (figure 2c). The braking force applied by yaw brakes 200a, 200d is different from the braking force applied by yaw brake 200c. The yaw brakes receive command (signals) and power from the measurement and control systems 400a, 500a, 1000a.

The yaw brakes of the exemplary yaw drive can be operated like piano keys. The operational frequency of each brake in simultaneous and/or sequential operation with respect to each other varies as per the measured parameters received from the measurement and control systems 400a, 500a, 1000a. Each of the yaw brakes can be activated and/or deactivated fully and/or partially for applying a braking force for the particular time in any of the aforementioned combinations even during any single event of the yawing of the wind turbine in any direction. Besides, the braking force applied by each brake can be separately controlled in any of the aforementioned combination even during any single event of the yawing of the wind turbine in any direction.

Furthermore, in any of the aforementioned combination even during any single event of the yawing of the wind turbine in any direction, the individual brake can be opened and or closed partially in order to allow the particular rotational smooth slippage which allows to complete the yawing smoothly and safely; not allowing yawing to overshoot. In addition to that, such activation and/or deactivation of the yaw brakes 200a, 200b, .... 200n, parallel to the rotation of the yaw motor 100, could take place several times with any of the aforementioned combination even during any single event of the yawing of the wind turbine in any direction. In any of the aforementioned combination, the activation and/or the deactivation of the yaw brakes in order to control the braking force and rotational slippage are decided considering the torque applied by direct drive yaw motor and the speed of the yaw motor.

For fast yawing, the yaw motor's torque is increased and the yaw brakes are released. For limiting the rotational speed of the nacelle about axis A, i.e. to limit dα/dt, particularly when the load caused by the wind aiming to rotate the nacelle exceeds a limit, at least one of the yaw brakes applies a partial braking force, i.e. 25 to 75% of its full braking force. This helps to achieve controlled slippage of between the yaw brake and the respective brake disc. In this case, the torque from the yaw motor can be smaller than during fast yawing.

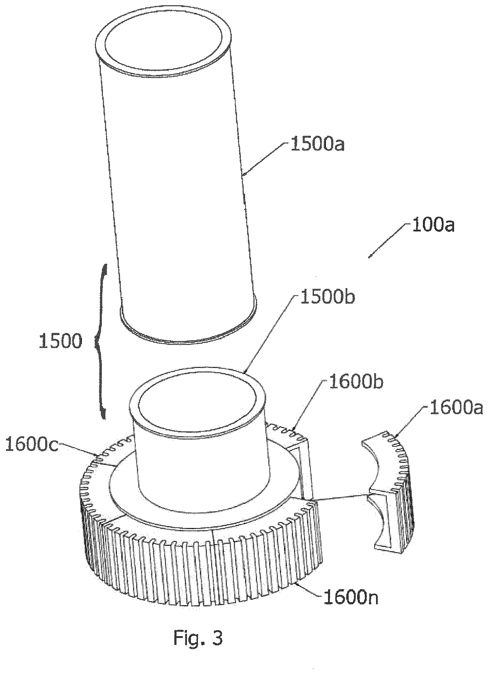

As shown in figure 3, the rotor 100a of an exemplary yaw motor comprises the motor shaft 1500 combined from several shaft segments 1500a, 1500b and several coil winding segments 1600a, 1600b, 1600c, ..., 1600n, which in combination form the winding of the rotor. The shaft segments are mechanically or materially connected with each other.

The coil winding segments can be materially or mechanically connected directly on shaft segment 1500b. The coil winding segments 1600a, 1600b, 1600c, ..., 1600n could also be connected on the shaft segment through one or more mounting brackets (not shown). Each coil winding segment has several conductors (not shown). After connecting all coil winding segments with the shaft segment, the conductors of a second coil winding segment are electrically connected with the conductors of a first and third coil winding segments on both side of second coil winding segment. The material of the conductor could be preferably Copper or Aluminium. Preferably, electrical connection of the conductors is with a 3-phase 120° phase shift; either single layer or several layer lap or wave winding.

The rotor 100a can be made with permanent magnets or electrically excitable pole shoes which can be mounted to the motor shaft. The rotor can have mounting brackets connected with the motor shaft and holding the permanent magnets or electrically excitable pole shoes.

The designs of coil winding segments and shaft segments are such that these can be disconnected individually from shaft segment 1500b during repair. This design of the rotor may offer one or more of the following advantages:
- reduced the manufacturing complexity by reducing the size of the individual segments
- simplified assembly process with other parts of the yaw motor
- reduced time for handling, manufacturing, assembly and maintenance
- In case of a failure, only the affected segment is required to be repaired or replaced
- Handing of the segment during maintenance can be done with smaller handling equipment
- The rotor can be replaced or repaired on top of tower.

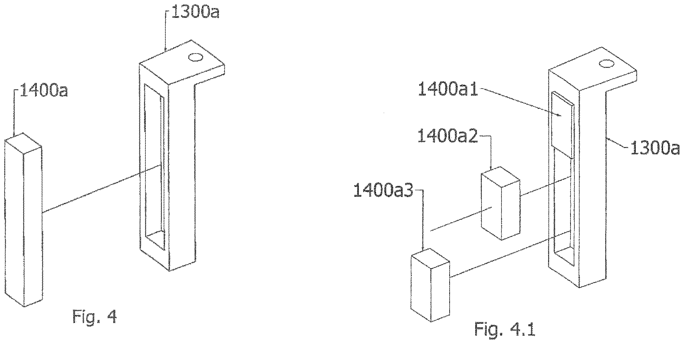

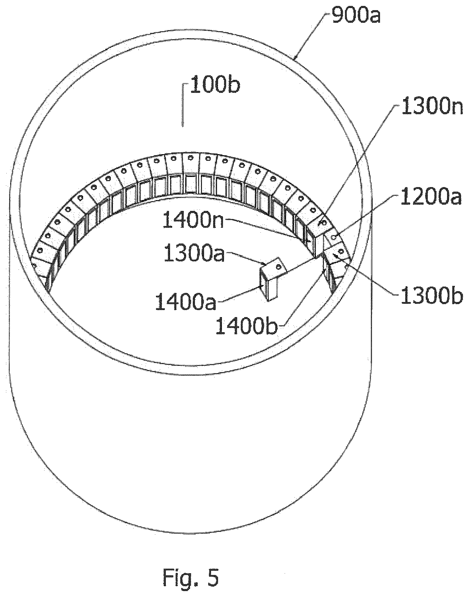

As shown in figure 5, the stator 100b of an exemplary yaw motor a mounting flange 1200a, several permanent magnets 1400a, 1400b, ..., 1400n and several magnet mounting brackets 1300a, 1300b, ..., 1300n. The magnet mounting brackets can be made from stainless steel or aluminium which are high strength materials to secure the magnets but are not affected by the magnetic field. The magnet mounting brackets can be made of a high strength material which is not affected by the magnetic field. First, each permanent magnet is mounted on a respective mounting bracket. Each mounting bracket 1300a, 1300b, ..., 1300n can hold at least one magnet but may hold several smaller magnets 1400a1, 1400a2, ..., 1400an (figure 4.1).

After that, as shown in figure 5, the magnet mounting brackets 1300a, 1300b, ..., 1300n each having one or more permanent magnets 1400a, 1400b, ..., 1400n are connected with the mounting flange 1200a, preferable mechanically. The mounting flange 1200a is mechanically or materially connected with the tower top segment 900a.

As the permanent magnets 1400a, 1400b, ..., 1400n are parts of the stator 100b of the direct drive yaw motor 100, higher weight simple ferrite magnets can be used instead of using Neodymium Iron Boron or Samarium Cobalt or Alnico magnets. The availability of ferrite magnets is better and the cost is lower. Further, the permanent magnets are electrically excitable and electrically de-magnetisable.

The stator's 100b design with several magnet mounting brackets 1300a, 1300b, ..., 1300n and several permanent magnets 1400a, 1400b, ..., 1400n may offer one or more of the following advantages:
- reduced manufacturing complexity by splitting the stator into several smaller size magnet mounting brackets, each holding one or more magnets.
- reduced size of the equipment required for adhesive curing (oven) because of the reduced size of the magnets and magnet mounting brackets.
- reduced time for handling, manufacturing, assembly and maintenance of the parts,
- In case of a failure, only the affected magnet needs to be repaired or replaced, which reduces the maintenance cost, as the bracket with the affected magnet can be easily separated from the mounting flange 1200a
- Handling of the magnet mounting bracket having a permanent magnet during maintenance can be done with smaller handling equipment and without a higher capacity crane.
- stator can be replaced or repaired on top of the tower without having to take the entire stator to the ground

In the stator electrically excitable pole shoes (not shown) can be used. These pole shoes are individually mounted directly on the flange 1200a or can be mounted on flange through pole shoe mounting brackets (not shown). The pole shoes are electrically connected back to back with each other. In case of any failure, the affected pole shoes can be replaced or repaired individually on top of the tower without a ground base crane.

Segmentation of the rotor 100a and the stator 100b could also be done in longitudinal direction or both in radial and longitudinal direction.

The rotor 100a can be made with permanent magnets or electrically excitable pole shoes which can be mounted to the motor shaft. The rotor can have mounting brackets connected with the motor shaft and holding the permanent magnets or electrically excitable pole shoes. In this arrangement, the stator 100b is made by using several coil winding segments 1600a, 1600b, 1600c, ..., 1600n having conductors. The several coil winding segments are directly mounted on the tower top segment 900a. Alternatively, the several coil winding segments can also be mounted on the tower top segment through mounting brackets.

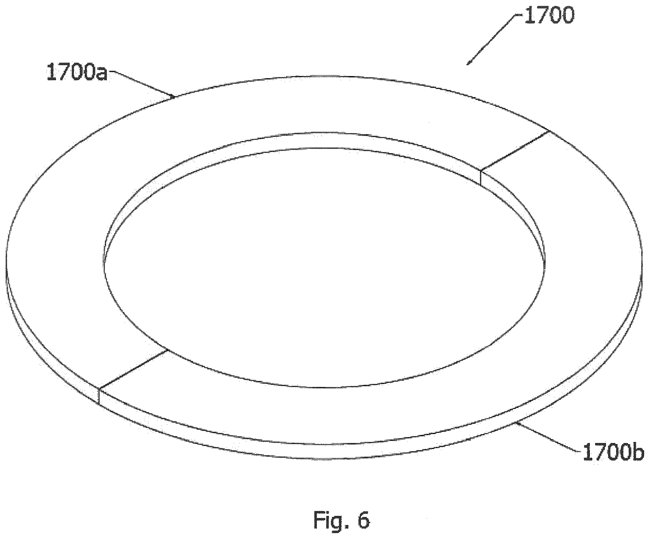

As shown in figure 6, an exemplary brake disc 1700 is split in several brake disc segments 1700a, 1700b. Alternatively, the brake disc can also be produced and mounted as a single part.

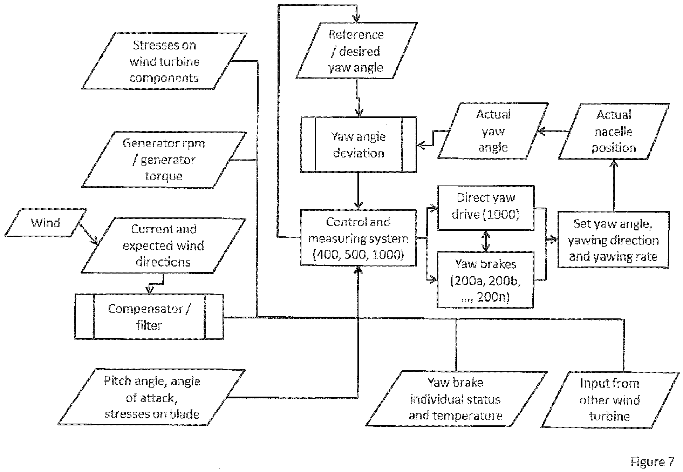

Furthermore, as shown in figure 7, the electronic control circuit or measurement and control system 400a, 500a, 1000a can take into account the wind velocity, pressure, current wind direction, expected wind direction and its intensity, wind force, other wind parameters, pitch angle of the individual blade, rpm of the turbine rotor, torque of the generator, the actual angle of attack of individual blade, the bending and untwisting of the blade, and the maximum stress level that is allowed in the design of the wind turbine, wake measurement, position of the nearby wind turbines and decide the optimum yaw position of the wind turbine. The electronic control circuit may also permit to affect and/or account for wake patterns, free stream and downstream, and deflection of individual blades.

The measurement and control system 400a, 500a, 1000a of the entire electronic control circuit is part of a closed loop including the yaw motor 100 and yaw brakes 200a, 200b (actuators), sensors for the actual nacelle position, for the actual yaw angle.

By doing so, the wind turbine rotor can be set at better yaw position which further improves the power generation and reduces the stresses of the individual blade and corresponding components of the wind turbine rotor. The measurement and control system 400a, 500a, 1000a can also take in to account the input signal from the wind vane, a anemometer, a wind lidar and/or other sensors and/or the signal from other wind turbine for deciding the optimum yaw position of the wind turbine. This arrangement reduces the load on the wind turbine components.

So with aforementioned arrangement of yaw motor and several yaw brakes, at any point of time during yawing operation of the nacelle and wind turbine rotor, there can be any combination of below mentioned operation during yawing of the wind turbine:
- Usage of the different braking force for different yaw brakes which is independently decided for each of the yaw brakes
- Full and/or partial activation and/or deactivation of different combination of the yaw brakes which are located at different locations
- Time/period during which different combinations of the yaw brakes are fully and/or partially activated or deactivated
- Full and/or partial activation and/or deactivation of different combinations of the yaw brakes in a particular sequence; the sequence is decided based on various operating and measured parameters
- Besides, full and/or partial activation and/or deactivation of different combination of the yaw brakes is decided based on the torque applied by the direct drive yaw motor and the speed of the direct drive yaw motor.
- Using micro digital yaw motion control with sequential activation and/or deactivation of different combination of the yaw brakes, the yawing of the wind turbine can be done fast, safe, smooth and without jerks.

Combined operation of the yaw motor 100 and several yaw brakes 200a, 200b, .... 200n reduce the sudden jerks and impact load on mechanical components of the wind turbine installing during yawing of the nacelle and turbine rotor, which eventually allows to optimize the design of the wind turbine components.

Further to that, the combined operation of the yaw motor 100 and several yaw brakes allows to use differential rotational velocities of the yaw motor while yawing even in single event of yawing which further allow to decelerate the rotation of the direct drive yaw motor when the turbine is closer to desired position. This helps to complete the yawing of the wind turbine smoothly, particularly with controlled slippage.

The braking forces/torque required to carry out the yawing in clockwise direction and counter clockwise direction can be different depending upon the different wind parameter and rpm of the wind turbine. Different braking forces/torque can be applied using the yaw brakes and yaw motor, in different yawing directions. This arrangement can reduce the sudden jerk and impact load on wind turbine components during yawing of the wind turbine.

Further, the combined operation of the yaw motor and the yaw brakes also reduces the load when the turbine rotor requires to be yawed out in case of emergency.

By using the yaw motor and the yaw brakes with a slip ring device for yawing the turbine can achieve the optimum yaw position without losing the generation which would be the case where there is no combination of direct drive yaw motor, several yaw brakes and cable twist free mechanism. Irrespective of the yawing position of the wind turbine, by using the direct drive yaw motor and several yaw brakes in combination with cable twist free mechanism for yawing, the wind turbine can be quickly and smoothly brought in to an optimum yawing position; similarly, in case of emergency, the wind turbine can also be quickly and smoothly yaw out.

Further to that, the yaw motor 100 together with several yaw brakes can also be used for aforementioned different combination to actively/dynamically manage the wake, particularly for wake steering and wake discernment.

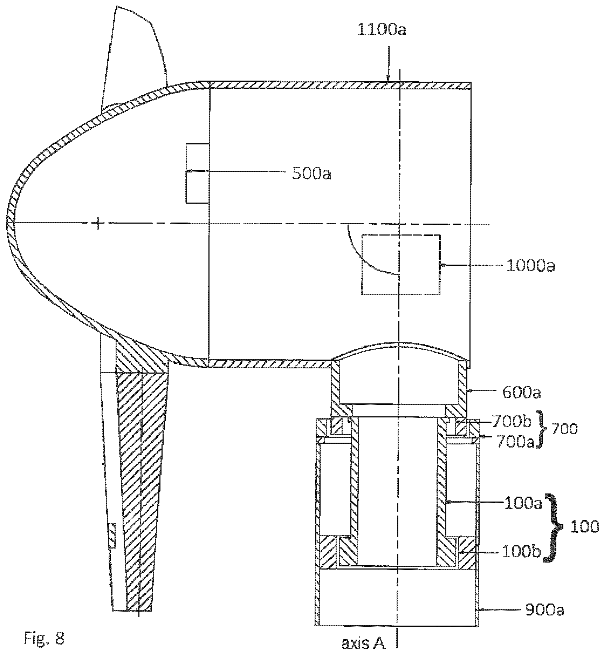

Figure 8 shows another yaw drive comprising a yaw motor 100, arranged to drive a nacelle 1100a of a wind turbine installation to rotate about an essentially vertical axis A. A stator 100b of the yaw motor is mechanically connectable with an inner wall of the tower top section 900a of the wind turbine installation.

The nacelle is rotatably supported on a tower, the top segment 900a of which is shown. A yaw bearing 700a, 700b facilitates rotation of the nacelle relative to the tower. The outer ring 700a is mechanically connected with the top tower segment 900a. The inner ring 700b is mechanically connected with a yaw base 600a which is mechanically connected with the nacelle.

The electronic control circuit arranged inside the nacelle has a component arranged to control the pitch drives which are arranged to change the pitch angle of the respective rotor blade. Further components 500a, 1000a of the electronic control circuit are electrically connected with component 400a. Component 1000a is also arranged to control the yaw motor. A cable harness connecting the electronic control circuit with the yaw motor are not shown. Further, a slip ring device electrically connecting the first section of the cable harness with a second section of the cable harness is not shown either. The electronic control circuit 400a, 500a, 1000a, also referred to as the measurement and control system, controls start, stop and the rotation of the yaw motor depending on the yawing requirement with reference to various operating conditions and measured parameters.

The rotor 100a of the yaw motor 100 is directly coupled with the yaw base 600a which is further connected with the nacelle 1100a. The yaw base can just be a section of the nacelle. The yaw base is connected with the rotating ring 700b of the yaw bearing 700. The yaw base rests on the rotating ring 700b. The stationary ring 700a of yaw bearing is connected with the tower top section 900a. The stator 100b of the direct drive yaw motor 100 is also mounted on the tower top section. The rotor 100a directly rotates the entire nacelle during yawing of the nacelle and turbine rotor and the nacelle rests on the rotating ring 700b of the yaw bearing. The rotor of the yaw motor directly rotates the entire nacelle during yawing, which may reduce transmission losses and can reduce the stress level on other components of the wind turbine installation.

The rotor of the yaw motor shown by figure 8 can be designed as shown by figure 3. The stator of the yaw motor shown by figure 8 can be designed according to figures 4, 4.1 and 5.

## Claims

1. A yaw drive comprising
a yaw motor (100), arranged to drive a nacelle (1100a) of a wind turbine installation to rotate about an essentially vertical axis A, and
a first yaw brake and a second yaw brake (200, 200a, 200b) each arranged to apply a braking force on the nacelle,
wherein the first and second yaw brakes are arranged to apply different braking forces on the nacelle.

2. Yaw drive, preferably according to claim 1, comprising a yaw motor (100), arranged to drive a nacelle (1100a) of a wind turbine installation to rotate about an essentially vertical axis A, wherein a stator (100b) of the yaw motor is mechanically connectable with a tower (900) of the wind turbine installation or with an inner wall of the tower.

3. Yaw drive according to any of the preceding claims, wherein a rotor (100a) of the yaw motor is mechanically connectable directly with the nacelle or with a yaw base (600a) of the nacelle.

4. Yaw drive according to any of the preceding claims, wherein the yaw brakes are arranged to be actuated independently, preferably wherein the first yaw brake can be actuated independently from the second yaw brake.

5. Yaw drive according to any of the preceding claims, wherein the yaw brakes are mechanically connectable with a rotor (100a) of the yaw motor or with a tower (900) of the wind turbine installation or with an inner wall of the tower.

6. Yaw drive according to any of the preceding claims, wherein a first brake disc (300a) is mechanically connectable with a rotor (100a) of the yaw motor or with a tower (900) of the wind turbine installation or with the inner wall of the tower, wherein the first brake disc is arranged to engage with one or more of the yaw brakes.

7. Yaw drive according to any of the preceding claims, wherein a second brake disc (300b) is mechanically connectable with a rotor (100a) of the yaw motor or with a tower (900) of the wind turbine installation or with the inner wall of the tower, wherein the second brake disc is arranged to engage with one or more of the yaw brakes, preferably wherein the second brake disc is spaced apart from the first brake disc along axis A.

8. Yaw drive according to any of the preceding claims, wherein the first yaw brake is positioned to engage with the first brake disc and the second yaw brake is positioned to engage with the second brake disc.

9. Yaw drive according to any of the preceding claims, comprising a first group of yaw brakes and a second group of yaw brakes spaced apart along axis A from the first group of yaw brakes.

10. Yaw drive according to any of the preceding claims, wherein
• a rotor (100a) of the yaw motor is mechanically connected with the nacelle, and/or
• the rotor is rotatable relative to the stator (100b), and/or
• the rotor comprises a motor shaft (1500), which can be hollow to permit access to the nacelle, wherein the motor shaft can have a climbing device, preferably arranged in a hollow of the motor shaft, preferably permitting access to the nacelle.

11. Yaw drive according to any of the preceding claims, wherein the motor shaft comprises two or more, preferably shell shaped, shaft segments (1500a, 1500b), which can be mechanically connected with each other to form the motor shaft.

12. Yaw drive according to any of the preceding claims, wherein the rotor comprises two or more coil winding segments (1600) which are mechanically connected with one or more of the shaft segments (1500a, 1500b).

13. Yaw drive according to claim 12, wherein each of the coil winding segments has several conductors, wherein the conductors of any coil winding segment (1600a or 1600b or 1600c or ..., or 1600n) are electrically connected with the conductors of the coil winding segments on both sides of that particular coil winding segment, preferably after connecting all coil winding segments (1600a, 1600b, 1600c, ..., i6oon) on one of the shaft segment (1500b).

14. Yaw drive according to any of the preceding claims, wherein the stator comprises several magnetic elements (1400) arranged circumferentially about axis A, preferably each of the magnetic elements is a permanent magnet or an electrically excitable pole shoe, preferably the stator comprises a mounting flange (1200) extending about axis A, preferably the stator comprises several mounting brackets (1300) each arranged to releasably accept one of the magnetic elements (1400), preferably wherein each of the mounting brackets is mechanically connected with the mounting flange.

15. Yaw drive according to any of the preceding claims, wherein the rotor (100a) comprises several magnetic elements (1400) arranged circumferentially about axis A, preferably each of the magnetic elements is a permanent magnet or an electrically excitable pole shoe, preferably the rotor comprises a mounting flange (1200) extending about axis A, preferably the rotor comprises several mounting brackets (1300) each mechanically connected with the mounting flange and each arranged to releasably accept one of the magnetic elements (1400).

16. Yaw drive according to any of the preceding claims, wherein the yaw motor has no roller bearing.

17. Yaw drive according to any of the preceding claims, wherein one or more guiding rollers or sliding pads are arranged to restrict the oscillation of the yaw motor shaft, preferably wherein one or more of the guiding rollers or sliding pads can be mechanically connected with the stator of the yaw motor, the tower (900) or any other stationary part inside the tower (900).

18. A wind turbine installation comprising a yaw drive according to any of the preceding claims, a tower, a nacelle rotatably supported by the tower, a generator arranged inside the nacelle, a wind turbine rotor having several rotor blades, wherein the wind turbine rotor is connected with the generator such that rotational power caused by wind can be converted by the generator into electrical power.

19. Wind turbine installation according to claim 18, comprising an electronic control circuit including a microprocessor and arranged inside the nacelle, inside the tower, bellow the nacelle, or above the tower, preferably comprising a slip ring device electrically connected with the electronic control circuit.

20. Wind turbine installation according to any of claims 18 to 19, comprising a yaw bearing (700) arranged to support the nacelle rotatably relative to the tower, wherein a bearing ring (700a, 700b) of the yaw bearing can have two or more angular segments arranged to extend about axis A.

21. Wind turbine installation according to claim 20, wherein the yaw brakes and/or the yaw motor including its stator and rotor are positioned below the yaw bearing.

22. Method to operate a yaw drive or a wind turbine installation according to any of the preceding claims, the method comprising the step:
S1 reducing or suspending a first braking force applied by the first yaw brake, preferably to the first brake disc, while a turbine rotor of the wind turbine installation rotates, particularly at a first point in time.

23. Method according to claim 20, wherein the nacelle rotates about axis A while the turbine rotor rotates about axis B.

24. Method according to any of claims 20 to 23, comprising the step
S2 increasing the first braking force, preferably after step S1.

25. Method according to any of claims 20 to 24, wherein step S1 or S2 is performed while a second braking force applied by the second yaw brake is kept constant.

26. Method according to any of claims 20 to 25, comprising the step
S3 reducing or suspending a second braking force applied by the second yaw brake, while a turbine rotor rotates, particularly after step S1 or after step S2.

27. Method according to any of claims 20 to 26, comprising the step
S4 increasing the second braking force, particularly after step S3.
